# EUROPEAN PATENT APPLICATION

(11) **EP 4 800 238 A1**
(43) Date of publication of application: **02.09.2026**
(21) Application number: 25160294.2
(22) Date of filing: 26.02.2025
(51) Int. Cl.: F03D 1/06, B29D 99/00, B29C 70/54, B29C 70/30, B25B 27/04

(54) **TOOL FOR MANUFACTURING A WIND TURBINE ROTOR BLADE AND METHOD FOR MANUFACTURING WIND TURBINE ROTOR BLADES**

(71) Applicant: Nordex Energy SE & Co. KG, 22419 Hamburg (DE)
(72) Inventor: Walter, Tim Jonas, 22419 Hamburg (DE)
(74) Representative: Völkl Siebenson Patentanwälte - Partnerschaft mbB

(57) **Abstract**

The invention relates to a method for manufacturing a wind turbine rotor blade (110), comprising the steps of:
a) providing two prefabricated parts in a mold (400), the prefabricated parts being arranged next to each other and forming a gap (302) between each other,
b) providing fiber material (304),
c) pushing the fiber material (304) into the gap (302).

## Description

The present disclosure relates to the field of manufacturing wind turbine rotor blades with improved efficiency.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step, half shells are produced from many layers of a fiber composite material, into which prefabricated parts and other elements such as spar caps are integrated. A resin infusion process takes place and the half shells cure in their half shell molds. In a second step, the manufactured half shells are placed on top of each other and bonded together for producing a wind turbine rotor blade. Alternatively, the rotor blade can be manufactured in a so-called integral manufacturing process. The half shells and thus the finally produced wind turbine rotor blade may be segmented for manufacturing a so-called split or segmented wind turbine rotor blade.

A prefabricated part is typically produced in a respective separate mold. For example, these prefabricated parts are flange segments for a root flange or a segmentation flange (in case of a segmented rotor blade). A prefabricated part for example comprises fiber layers, core elements and/or inserts, e.g. threaded bushings, for mounting the rotor blade with the root to a rotor hub with screw bolts or for mounting rotor blade segments together. Such items are put into the separate mold, embedded in an appropriate resin during an infusion process and cured to produce the prefabricated and pre-hardened part.

In the later step to manufacture the wind turbine rotor blade or a half shell, the prefabricated parts are brought into the respective mold for a wind turbine rotor blade or half shell together with other elements. Within such mold, prefabricated parts like flange segments may be arranged adjacent to each other. Due to manufacturing tolerances, among other things, a small gap of some millimeters or centimeters is formed between two adjacent prefabricated parts. Such gap is a critical region of the wind turbine rotor blade, in particular with regard to the structural properties and a consistent production quality of a wind turbine rotor blade.

It is an object of the present disclosure to provide a technical concept for the manufacturing of wind turbine rotor blades which contributes particularly to a consistent production quality.

This object is solved by a solution according to the independent claim. Advantageous embodiments are given in the sub-claims.

According to a first aspect a method for manufacturing a wind turbine rotor blade is disclosed. The method comprises the steps of:
a) providing two prefabricated parts in a mold, the prefabricated parts being arranged next to each other and forming a gap between each other,
b) providing fiber material, and
c) pushing the fiber material into the gap.

The inventive method offers several advantages. By filling the gap with fiber material in general, structural integrity and bonding between the prefabricated parts are improved, reducing the risk of weak points in the final wind turbine rotor blade.

A key advantage of pushing the fiber material into the gap is that it ensures the material is properly positioned and compacted, leading to a homogeneous distribution of fiber material and resin during the infusion process. Additionally, actively pushing the fiber material allows for better control over the filling process, compensating for variations in the gap size and ensuring consistent quality across different rotor blades. This ensures that independent of a gap size sufficient fiber material is within the gap, contributing to a consistent and reliable infusion of resin during the vacuum-assisted curing process. Further, it is not necessary to keep different variants of preforms (of fiber material) in stock to cover different types of gap sizes, e.g. widths. Furthermore, by the pushing step randomly oriented fibers are introduced into the gap, which contributes to structural strength in the gap area. Thus, the pushing process improves the mechanical properties of the final wind turbine rotor blade by enhancing adhesion between the prefabricated parts and reducing the risk of voids or dry spots or generally inhomogeneous structure in the gap. Further, the overall quality and durability of the rotor blade is enhanced while streamlining the manufacturing process.

As already indicated above, the prefabricated parts are (pre-)cured parts. For example, the prefabricated parts are flange segments for a root flange or a segmentation flange of the wind turbine rotor blade.

During the manufacturing process, the position of the prefabricated parts in the mold is, for example, defined by a flange part connected to the mold, e.g. the half shell mold. The prefabricated parts are attached to the flange part to have a fixed position. This for example is done for prefabricated parts being flange segments. Alternatively, the position of prefabricated parts in the mold is defined by means of a laser positioning device. In the defined position, the gap is formed, which typically has a width of 4 mm to 10 mm. Deviations of the gap size, e.g. width, relate from manufacturing tolerances of the prefabricated parts, e.g. flange segments for the root flange.

The pushing of the fiber material can be done manually (e.g. by spatula) or by the help of tools.

The fiber material is, for example, glass fiber material, e.g. UD rovings. These roving are suitable to be pushed into the gap filling it completely. The amount of fibers can be adapted to the seize of the gap.

After step c) further subsequent steps for manufacturing the rotor blade may take place. Such further steps are, amongst others: laying further fiber layers into the mold, laying further parts into the mold, performing the vacuum infusion process, curing the resin, and further more.

According to an embodiment, prior to step c) a tool is provided. The tool comprises a tool body. The tool comprises a pushing plate for pushing fiber material into the gap between the two prefabricated parts. The pushing plate is moveably supported at the tool body and can be moved between an extracted position and a retracted position. The tool comprises a spring element being supported at the tool body. The spring element exerts a preload force on the pushing plate. The pushing plate is held in the extracted position by the preload force. The pushing plate can be moved into the retracted position against the preload force. In step c) the fiber material is pushed into the gap with the pushing plate of the tool.

The tool offers several advantages in the process of inserting fiber material into the gap. By using a springloaded pushing plate, the tool provides a controlled and consistent insertion force, ensuring that the fiber material is evenly compacted within the gap, compensating for variations in gap width due to manufacturing tolerances. The tool provides a high repeatability, as the spring element applies a consistent preload force, making the process independent of individual workers and their varying techniques. This results in consistent and reliable quality, minimizing deviations in fiber and resin distribution. Additionally, the tool significantly reduces costs for rework and repairs, as defects caused by inhomogeneous fiber placement and resin filling are minimized, leading to a more efficient, fast and cost-effective manufacturing process.

As with mere manual work operators must carefully position and press the fiber material into the gap, the invention reduces the necessary production time and labor costs. Further, the invention avoids applying different levels of force due to different workers and thus inconsistencies in fiber compaction. This further avoids an uneven amount of fiber material in the gap, which in turn affects the resin distribution during infusion. Variations in the degree of resin filling would negatively lead to resin-rich or resin-deficient areas, impacting the structural integrity, particularly in the root region of the rotor blade, where high mechanical loads occur.

The tool is preferably made from a metal material, e.g. made from aluminum. Aluminum provides the necessary stiffness and low weight of the tool. Nevertheless, other materials are conceivable.

The spring element is preferably a tension spring (e.g. screw or coil spring). Depending on the spring element, the necessary preload force and thus the compression of the fiber material in the gap can be adjusted.

The thickness of the pushing plate is adopted to the gap size. E.g. the plate has a thickness of at least 4 mm. A width of the pushing plate is preferably between 20 mm to 35 mm. The width corresponds to a width of the contact area of the pushing plate with the fiber material.

According to an embodiment, steps b) and c) are repeated until, when the pushing plate is pressed into the gap against the fiber material, a counterforce is exerted on the pushing plate that is greater than the preload force of the spring element and moves the pushing plate into the retracted position. In this embodiment, the spring element is configured such that the final force application onto the fiber material occurs during the last step of filling material into the gap. Only after this last filling step and the subsequent pushing step the pushing plate is caused to be pushed back into the retracted position. During intermediate, i.e. prior, filling steps, the spring force is strong enough to keep the pushing plate in its extracted position.

This ensures that the gap is completely filled with fiber material while avoiding over-compression, which could negatively affect resin penetration and structural properties.

According to an embodiment, steps b) and c) are repeated after the pushing plate is pressed into the gap against the fiber material and a counterforce is exerted on the pushing plate that is greater than the preload force of the spring element and moves the pushing plate towards the retracted position. In this embodiment, the spring element is set up in such a way that the pushing plate exerts a defined force on the fiber material at each filling step. For example, the pushing plate is configured such that the pushing plate can be inserted fully into the gap. In other words, the pushing plate can completely fill the gap regarding the direction of insertion of material. In other words again, the pushing plate has a portion that is inserted into the gap for pushing, wherein this portion has a high that corresponds to the depth of the gap.

According to an embodiment, the pushing plate is slidably supported on the tool body in a form-fit manner. In general, a form-fit connection for guiding the pushing plate is established. For example, respective guide elements at the tool body and/or pushing plate may be provided to ensure the form-fit connection. This ensures a reliable movement of the pushing plate with respect to the tool body.

According to an embodiment, the tool body comprises a cavity, in which the pushing plate is accommodated. In embodiments, a shape of the cavity corresponds to an outer shape of the pushing plate for guiding the pushing plate in a form-fit manner. The cavity may be formed by the tool body, e.g. walls of the tool body which are spaced apart to form an interspace, i.e. the cavity. The cavity is open at one side for the pushing plate to protrude out of it. This contributes to the above functions and advantages. Particularly, a form-fit guidance mechanism improves the precision and durability of the tool, preventing misalignment of the pushing plate and ensuring reliable operation. Furthermore, this design minimizes frictional losses and enhances the longevity of the tool by reducing wear on moving components.

According to an embodiment, the pushing plate at least partially protrudes from the tool body in the extracted position. Thus, the pushing plate can be easily inserted into the gap.

According to an embodiment, the pushing plate is fully inserted into the cavity in the retracted position. Thus, the pushing plate does not protrude out of the cavity in the retracted position. In particular, the tool body comprises a width which is larger than a width of the gap. If the pushing plate is fully retracted, the pushing plate is flush with the tool body. In other words, edges of the pushing plate and the tool body are flush to each other. This means that the tool body can lay on a surface of the prefabricated parts during the pushing process, if the pushing plate is fully inserted into the cavity due to a respective counterforce arising from the fiber material.

It is noted that there may be intermediate positions of the pushing plate with respect to the tool body, in which the pushing plate is only partially pushed back, e.g. as the fiber material is filled in several steps.

According to an embodiment, the tool body comprises a connection element. The spring element is connected to the connection element for being supported on the tool body. The connection element can serve only for supporting the spring element or additionally to structurally stabilize the tool body, e.g. by connecting two walls of the tool body. In any case, the connection element contributes to a reliable support of the spring element on the tool body.

According to an embodiment, the pushing plate comprises an elongated hole. The tool body comprises a connection element, which extends through the cavity and the elongated hole of the pushing plate. The connection element connects two opposite walls of the tool body defining the cavity. These design features enhance the guidance of the pushing plate at the tool body and ensure that its movement remains controlled and repeatable. The connection element may serve as an abutment element, thereby effectively limiting the movement of the pushing plate with respect to the tool body.

According to an embodiment, the tool body has an elongated hole, in which a corresponding guide element of the pushing plate engages. The movement of the pushing plate into the extracted position is limited by an abutment of the guide element at a respective end of the elongated hole. The elongated hole is provided in a wall, e.g. in a wall of the tool body. The elongated hole serves as an abutment for the guide element of the pushing plate. The guide element, for example, is a guide pin. The guide element also provides a clear mechanical stop, improving reproducibility and making the tool robust. Further, by constraining the movement of the pushing plate within predefined limits, the tool prevents excessive deflection, which could otherwise affect fiber placement precision.

According to an embodiment, the guide element of the pushing plate is connected to the spring element. Thus, the guide element has a further function, namely being a support for the spring element. Thus, the pushing plate is preloaded via the guide element.

According to an embodiment, a further spring element is provided, supported at the tool body and configured to apply a preload force onto the pushing plate. The pushing plate may further comprise an additional guide element connected to this further spring element. The spring element and the guide element may be arranged on a front side of the tool body and the further spring element and further guide element may be arranged on the back side of the tool body. The front and back side of the tool body are arranged opposite to each other.

In general, we refer to the above functions and advantages, which similarly apply to further spring elements and/or further guide elements. By providing a further spring element, the preload force can be efficiently adjusted, i.e. increased, depending on the intended use. The use of multiple spring elements and guide elements ensures balanced force distribution, reducing wear and enhancing tool longevity. Additionally, these embodiments contribute to the prevention of tilting or uneven movement of the pushing plate, ensuring that the fiber material is inserted uniformly.

According to a second aspect, a tool for manufacturing a wind turbine rotor blade is provided. The tool comprises a tool body and a pushing plate for pushing fiber material into a gap between two prefabricated parts. The pushing plate is movably supported at the tool body and can be moved between an extracted position and a retracted position. A spring element is supported at the tool body, the spring element exerting a preload force on the pushing plate. The pushing plate is held in the extracted position by the preload force and can be moved into the retracted position against the preload force.

The tool enables the above-mentioned functions and advantages. The above description and embodiments according to the first aspect analogously apply to the tool according to the second aspect and vice versa.

According to an embodiment, the tool body comprises one or more handle elements. One or more handle elements improve ergonomics, enabling precise operation and reducing operator fatigue during repetitive use. Furthermore, they enhance safety by providing a stable grip, minimizing the risk of accidental slips or misalignment during operation. Preferably, the tool body comprises two handle elements arranged at opposite sides with respect to a movement direction of the pushing plate.

Further advantages, features and functions, which are explained in connection with the figures, are given in the following exemplary embodiments of the invention. Identical, similar or similarly acting elements are provided with the same reference signs in the figures.

In the figures:
- FIG. 1: shows a schematic view of a wind turbine.
- FIG. 2: shows a schematic view of a wind turbine rotor blade.
- FIG. 3: shows a schematic view of a rotor blade root end.
- FIG. 4: shows a schematic flow chart of the method according to an embodiment of the invention.
- FIG. 5: shows a schematic view of a tool according to an embodiment of the invention.
- FIG. 6-8: show schematic stages of a method according to an embodiment of the invention.

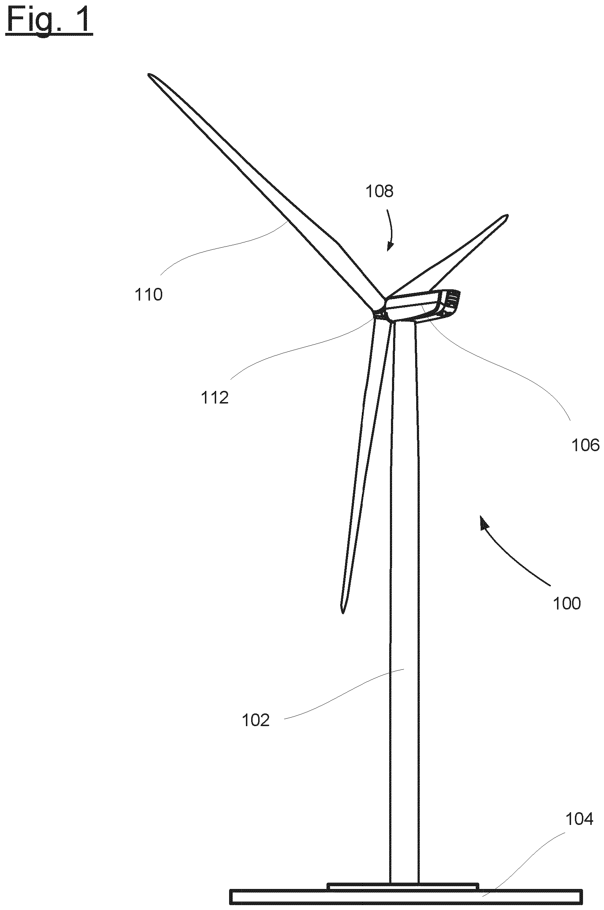

FIG. 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

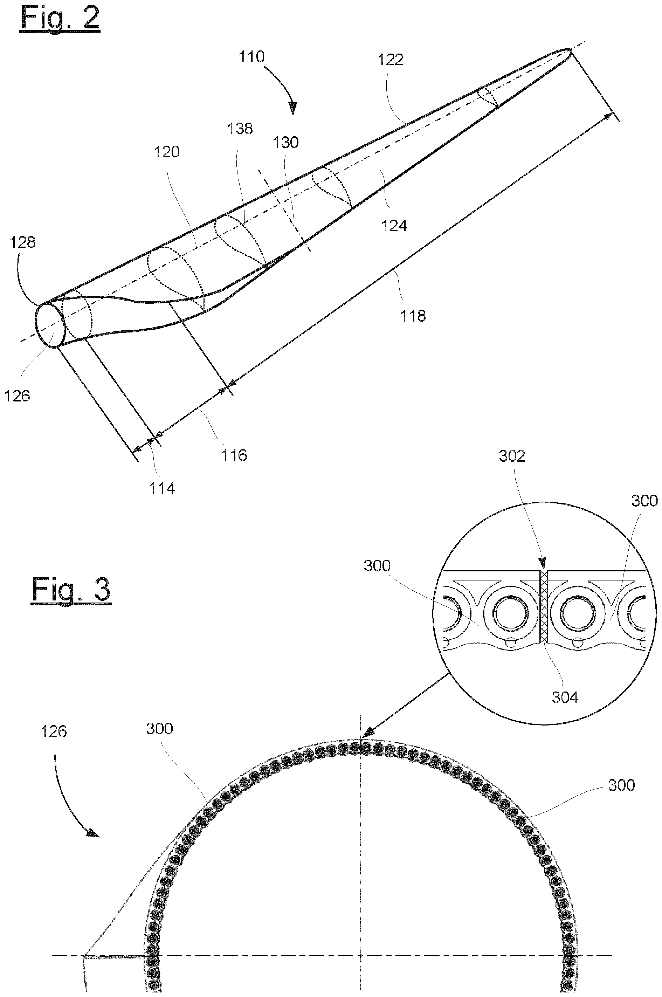

FIG. 2 shows an exemplary wind turbine rotor blade 110. The wind turbine rotor blade 110 has the shape of a conventional rotor blade and has a rotor blade root portion 114 facing the rotor hub 112. The rotor blade root portion 114 typically has an essentially circular cross-section. The rotor blade root portion 114 is followed by a transition portion 116 and profile portion 118. The wind turbine rotor blade 110 has a pressure side 122 and an opposite suction side 124. The wind turbine rotor blade extends along a spanwise direction 120 (also named main extension direction or longitudinal direction) and a flapwise direction 130, which runs transverse to the spanwise direction 120. The wind turbine rotor blade 110 is essentially hollow inside.

In the rotor blade root portion 114 a rotor blade root end 126 with a flange 128 is provided, by means of which the wind turbine rotor blade 110 can be mechanically connected to a pitch bearing or an extender. The wind turbine rotor blade 110 can be a segmented rotor blade.

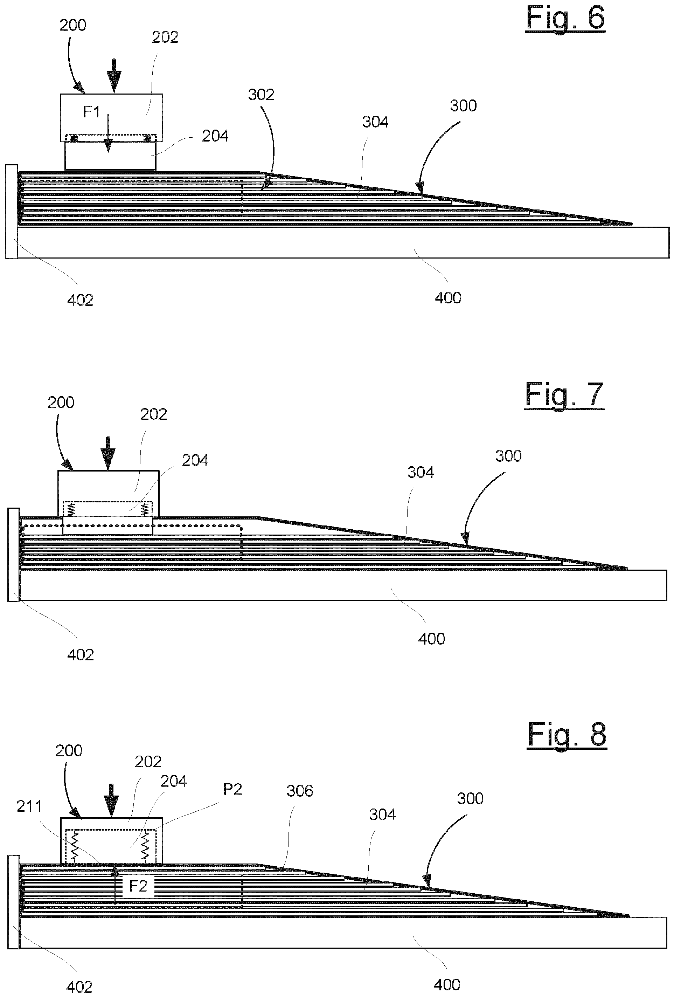

FIG. 3 exemplarily shows the rotor blade root end 126 in more detail. In the present example, four root flange segments 300 (two of them shown), which represent prefabricated parts in the context of this writing, form the root flange 128. The root flange segments 300 have a length along the spanwise direction 120 of, for example, about 2 m to 4 m. If the root flange segments are laid into a mold 400, the position of the root flange segments 300 is fixed with respect to a root-side mold flange 402, as already explained. The root flange segments 300 are fixed to the flange part, e.g. via screw bolts, the flange part being mounted in a fixed manner to the mold (shown in figures 6 to 8).

In an enlarged envision (detail view in FIG. 3) the border area between two root flange segments 300 is shown.

Between the two root flange segments 300 a gap 302 is formed, which gap 302 may vary slightly depending on manufacturing tolerances, for example. In the gap 302 fiber material 304 is placed.

According to a method according to an embodiment of the invention, after initial steps of providing the prefabricated parts 300 and the fiber material 304 as described above, fiber material 304 is pushed into the gap 302, e.g. manually by hand or with a spatula. The fiber material 304, in the present example, is glass fiber material, e.g. in the form of rovings. The fiber material 304 in the gap 302 enables the above-mentioned functions and advantages.

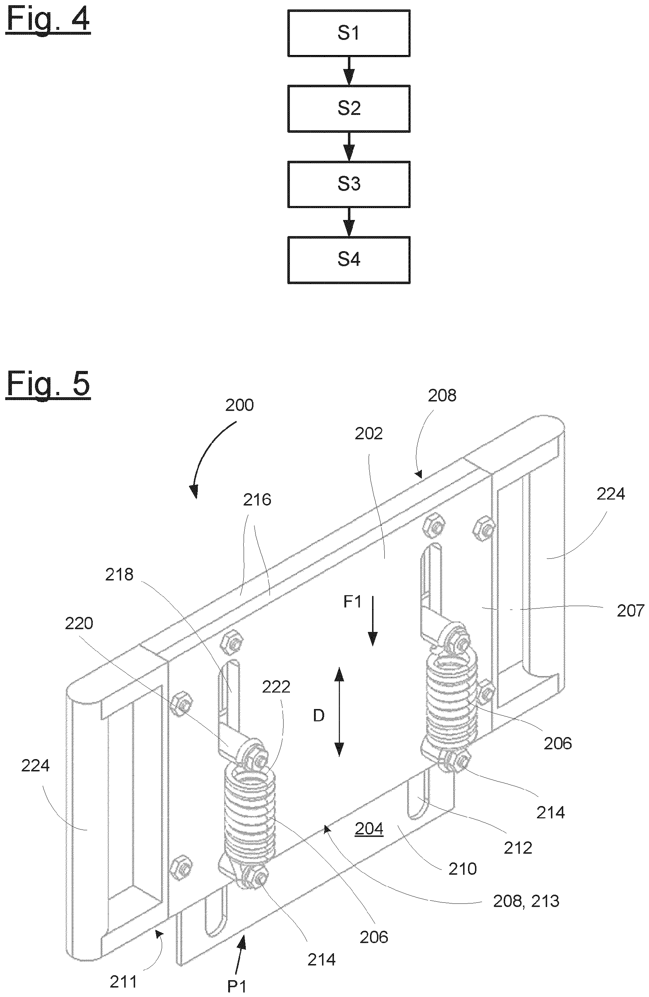

In the following, an improved method according to an embodiment of the invention is described alongside FIG. 4 to 8 in more detail, wherein FIG. 4 shows a schematic flowchart of the method. The method in general is similar to the above description, except that it focuses on a special tool 200 for pushing the fiber material 304 into the gap 302.

FIG. 5 shows the tool 200 in a perspective view. The tool 200 has a tool body 202 formed by two opposite walls 216. The two walls 216 define a cavity 208, i.e. an inner space between the walls 216. The cavity 208 is open at a bottom side 211, e.g. by forming a slit 213. Within the cavity 208, a pushing plate 204 is accommodated, which partially protrudes out of the cavity 208 at the bottom side 211 out of the slit 213. The cavity 208 corresponds to an outer shape 210 of the pushing plate 204 such that the pushing plate 204 is slidably supported at the tool body 202 in a form-fit manner.

On each of the front side 207 and on the back side 209 (not shown) of the tool body 202, the tool 200 comprises two spring elements 206. The spring elements 206 are tension springs (coil springs) and are each connected to the pushing plate 204 at one end and at the tool body 202 with the respective other end. For support of the spring elements 206, the tool body 202 has connection elements 214. A respective end of each spring element 206 is connected to a corresponding connection element 214. Presently, a connection element 214 is a pin or pin-like structure that interconnects the two walls 216. The pushing plate 204 comprises two elongated holes 212, through which one connection element 214 extends inside the cavity 208.

To connect each spring element 206 with the pushing plate 204, the pushing plate 204 comprises guide elements 220, two for the front side 207 and two for the back side 209 of the tool body 202. Each guide element 220 protrudes through respective elongated holes 218 of the tool body 202 and are connected to the respective other ends of the spring elements 206. The guide elements 220 engage the elongated holes 218 in a form-fit manner.

With the above configuration, the pushing plate 204 can be slidably moved between two end positions, an extracted position P1 as shown in FIG. 5 and a retracted position P2, as shown in FIG. 8. In the retracted position, the pushing plate 204 is fully inserted into the tool body 202. I.e. the pushing plate 204 does not protrude out of the cavity 208. In the retracted position, the pushing plate 208 is flush with the tool body 202 at the bottom side 211.

The spring elements 206 exert a spring force onto the pushing plate 204, which is thus preloaded with a (resulting) preload force F1. The preload force F1 holds the pushing plate 204 in the extracted position. This is because each connection element 214 is arranged between the assigned guide element 220 and the bottom side 211 with respect to the direction of movement D of the pushing plate 204. Thus, each spring element 206 pulls the respective guide element 220 towards the corresponding connection element 214. The movement of the pushing plate 204 out of the cavity 208 is limited in that the guide elements 220 abut at a respective end 222 of the elongated hole 218, the ends 222 facing the bottom side 211 of the tool body 202. The pushing plate 204 can be moved into the retracted position P2 against that preload force F1. The pushing plate 204 can continuously assume any intermediate position between the two end positions P1 and P2, depending on the counterforce acting on the pushing plate 204 to push it into the cavity 208.

Furthermore, the tool body 202 comprises two handle elements 224 at opposite sides of the tool body 202. They support a movement of the tool in the direction D. With these handle elements 224, the tool 200 can be easily gripped by a person and used for its intended purpose, as below.

The method according to FIG. 4 starts with a step S1 in which the two prefabricated parts, e.g. the root flange segments 300, are provided in a mold 400 and are attached to a mold flange 402 as described above.

In a next step S2, the fiber material 304, e.g. as explained above, is provided.

In a further step S3, the tool 200, e.g. as described above, is provided.

Steps S1 to S3 can also be carried out in a different order.

Reference is made to FIG. 6 to 8, showing a schematic side view of the root flange segments 300 laying in the mold 400 in a plane running through the gap between the two root flange inserts at different stages of the method.

In a next step S4, the fiber material 304 is pushed into the gap 302 between the two root flange segments 300 by means of the tool 200. The fiber material 304 is placed loose in the region of the gap 302 or at least partially in the gap 302, e.g. manually with a hand. The tool 200 is gripped with the hands on the handle elements 224 and placed accordingly above the gap 302. The pushing plate 204 is then inserted into the gap 302 and pushes the fiber material 304 downwards in the gap 302 as far as the pushing plate 204 reaches into the gap 302.

Initially, when there is no fiber material 304 in the gap 302, the fiber material 304 can be pushed into the gap 302 without any significant resistance.

Steps S2 and S4 are then repeated, until the desired quantity and compactness of fiber material 304 is achieved in the gap 302. This depends mainly on a height and a width of the gap 302.

During the repetitions of steps S2 and S4, intermediate stages are achieved, in which the pressed-in fiber material 304 exerts a respective intermediate counterforce on the pushing plate 204 against the resulting preload force F1 of the spring elements 206, so that the pushing plate 204 is moved in a direction towards the retracted position P2. However, the pushing plate 204 is not fully pushed back into the tool body 202. Such intermediate stage is shown in FIG. 7.

The final force application onto the fiber material 304 in the gap 302 occurs during the last execution of steps S2 and S4. As soon as enough fiber material 304 is in the gap 302 and sufficiently compacted in there, during the pushing step, the fiber material 304 exerts a counterforce F2 on the pushing plate 204 against the spring elements 206, so that the pushing plate 204 is moved into the fully retracted position P2, the final state of the method as shown in FIG. 8. In the present embodiment, the final state is reached when the fully compacted fiber material 304 is flush with an inner surface 306 of the root flange segments 300. Further in this final state, the pushing plate 304 is flush with the tool body 202 at its bottom side 211.

### List of reference signs

- 100: wind turbine
- 102: tower
- 104: foundation
- 106: nacelle
- 108: rotor
- 110: wind turbine rotor blade
- 112: rotor hub
- 114: rotor blade root portion
- 116: transition portion
- 118: profile portion
- 120: spanwise direction
- 122: pressure side
- 124: suction side
- 126: rotor blade root end
- 128: flange
- 130: flapwise direction

- 200: tool
- 202: tool body
- 204: pushing plate
- 206: spring element
- 207: front side
- 208: cavity
- 209: back side
- 210: outer shape
- 211: bottom side
- 212: elongated hole of the pushing plate
- 213: slit
- 214: connection element
- 216: wall
- 218: elongated hole of the tool body
- 220: guide element
- 222: end
- 224: handle

- 300: root flange segments
- 302: gap
- 304: fiber material
- 306: inner surface

- 400: mold
- 402: mold root flange

- D: direction of movement
- F1: preload force
- F2: counterforce
- P1: extracted position
- P2: retracted position

## Claims

1. Method for manufacturing a wind turbine rotor blade (110), comprising the steps of:
a) providing two prefabricated parts in a mold (400), the prefabricated parts being arranged next to each other and forming a gap (302) between each other,
b) providing fiber material (304),
c) pushing the fiber material (304) into the gap (302).

2. Method according to claim 1, wherein
- prior to step c) a tool (200) is provided, the tool (200) comprising:
-- a tool body (202),
-- a pushing plate (204) for pushing fiber material (304) into the gap (302) between the two prefabricated parts, wherein the pushing plate (204) is moveably supported at the tool body (202) and can be moved between an extracted position (P1) and a retracted position (P2), and
-- a spring element (206) being supported at the tool body (202), the spring element (206) exerting a preload force (F1) on the pushing plate (204), wherein the pushing plate (204) is held in the extracted position (P1) by the preload force (F1) and can be moved into the retracted position (P2) against the preload force (F1), and
- in step c) the fiber material (304) is pushed into the gap (302) with the pushing plate (204) of the tool (200).

3. Method according to claim 2, wherein steps b) and c) are repeated until, when the pushing plate (204) is pressed into the gap (302) against the fiber material (304), a counterforce (F2) is exerted on the pushing plate (204) that is greater than the preload force (F1) of the spring element (206) and moves the pushing plate (204) into the retracted position (P1).

4. Method according to claim 2, wherein steps b) and c) are repeated after the pushing plate (204) is pressed into the gap (302) against the fiber material (304) and a counterforce (F2) is exerted on the pushing plate (204) that is greater than the preload force (F1) of the spring element (206) and moves the pushing plate (204) towards the retracted position (P1).

5. Method according to any one of claims 2 to 4, wherein the pushing plate (204) is slidably supported on the tool body (202) in a form-fit manner.

6. Method according to any one of claims 2 to 5, wherein the tool body (202) comprises a cavity (208), in which the pushing plate (204) is accommodated.

7. Method according to claim 6, wherein, in the extracted position (P1), the pushing plate (204) at least partially protrudes from the tool body (202) out of the cavity (208).

8. Method according to claim 6 or 7, wherein, in the retracted position (P2), the pushing plate (204) is fully inserted into in the cavity (208).

9. Method according to any one of claims 6 to 8, wherein a shape of the cavity (208) corresponds to an outer shape (210) of the pushing plate (204) for guiding the pushing plate (204) in a form-fit manner.

10. Method according to any one of claims 6 to 9, wherein the tool body (200) comprises a connection element (214), wherein the spring element (206) is connected to the connection element (214) for being supported on the tool body (202).

11. Method according to any one of claims 6 to 9, wherein
- the pushing plate (200) comprises an elongated hole (212),
- the tool body (200) comprises a connection element (214), which extends through the cavity (208) and the elongated hole (212) of the pushing plate (204), and
- the connection element (214) connects two opposite walls (216) of the tool body (202) defining the cavity (208).

12. Method according to any one of claims 2 to 11, wherein the tool body (202) has an elongated hole (218), in which a corresponding guide element (220) of the pushing plate (204) engages, so that the movement of the pushing plate (204) into the extracted position (P1) is limited by an abutment of the guide element (220) at a respective end (222) of the elongated hole (218).

13. Method according to claim 12, wherein the guide element (220) of the pushing plate (204) is connected to the spring element (206).

14. Tool (200) for manufacturing a wind turbine rotor blade (110), comprising
- a tool body (202),
- a pushing plate (204) for pushing fiber material (304) into a gap (302) between two prefabricated parts, wherein the pushing plate (204) is moveably supported at the tool body (202) and can be moved between an extracted position (P1) and a retracted position (P2), and
- a spring element (206) being supported at the tool body (202), the spring element (206) exerting a preload force (F1) on the pushing plate (204), wherein the pushing plate (204) is held in the extracted position (P1) by the preload force (F1) and can be moved into the retracted position (P2) against the preload force (F1).

15. Tool (200) according to claim 14, wherein the tool body (202) comprises one or more handle elements (224) for using the tool (200).
